# EUROPEAN PATENT SPECIFICATION

(11) **EP 3 872 387 B1**
(45) Date of publication and mention of the grant of the patent: **06.09.2023**
(21) Application number: 21159651.5
(22) Date of filing: 26.02.2021
(51) Int. Cl.: F21K 9/61, F21S 4/28, F21S 8/04, F21V 8/00

(54) **PANEL LAMP**
PANEL-LAMPE
LAMPE DE PANNEAU

(30) Priority: 28.02.2020 CN 202020231367 U
(43) Date of publication of application: 01.09.2021
(73) Proprietor: Xiamen Leedarson Lighting Co., Ltd., Xiamen, Fujian 361010 (CN)
(72) Inventor: CAO, Liangliang, Xiamen, fujian 361010 (CN); HUANG, Yuxin, Xiamen, fujian 361010 (CN)
(74) Representative: Leihkauf, Steffen Falk

(56) References cited:
- EP-A1- 3 041 319
- CN-U- 208 907 554
- US-A1- 2012 120 326
- US-A1- 2014 022 821
- US-A1- 2014 240 644
- US-A1- 2016 139 329

## Description

### Technical Field

The present disclosure relates to the field of luminaires, in particular, to a panel lamp.

### Background Art

A light source of a panel lamp is located on a side surface of a light guide plate, and when the light source is used for a long period of time and heat rises, the light source is easily damaged. US2012120326A1 discloses an edge-light illuminating device; US2016139329A1 discloses a light source device and display apparatus; US2014022821 A1 discloses a lighting device; CN208907554U discloses a waterproof panel lamp; and EP3041319A1 discloses a lighting arrangement.

### Summary

The present disclosure aims at providing a panel lamp, with the purpose of solving the problem that the light source of the panel lamp is easily damaged in the prior art.

In order to achieve this purpose, an implementation of the present disclosure adopts the following technical solution:
a panel lamp, including a frame body having a mounting groove, a light guide plate mounted in the mounting groove, a first light source board provided in the mounting groove, a first elastic member provided in the mounting groove, a second light source board provided in the mounting groove, and a second elastic member provided in the mounting groove, wherein the light guide plate has a first side surface, a second side surface, a third side surface and a fourth side surface connected in sequence; the first light source board is located between the first side surface and an inner side wall of the mounting groove; the first elastic member is located between the third side surface and the inner side wall of the mounting groove; the second light source board is located between the second side surface and the inner side wall of the mounting groove; and the second elastic member is located between the fourth side surface and the inner side wall of the mounting groove.

In one implementation, both the first elastic member and the second elastic member are made of foam.

In one implementation, both the first elastic member and the second elastic member are formed by elastic steel sheets.

A back panel connected to the frame body is further included, and the light guide plate is located between the back panel and the frame body.

In one implementation, the frame body is provided thereon with a positioning groove, and an edge of the back panel is provided with a positioning protrusion inserted into the positioning groove.

A diffusion plate provided on a side of the light guide plate away from the back panel is further included.

An atomization layer is provided on a side of the diffusion plate away from the light guide plate, and the density of the atomization layer gradually decreases in a direction from junction between the first side surface and the second side surface to junction between the third side surface and the fourth side surface.

In one implementation, a reflective sheeting provided between the light guide plate and the back panel is further included, and pearl cotton is provided between the reflective sheeting and the back panel.

In one implementation, a surface of a side of the light guide plate close to the reflective sheeting is provided with mesh dots for changing a propagation direction of light, density of the mesh dots gradually increases in the direction from the junction between the first side surface and the second side surface to the junction between the third side surface and the fourth side surface; and the mesh dots are mesh holes provided in the light guide plate, or the mesh dots are printed dots printed on the surface of the light guide plate.

The implementations of the present disclosure have the following beneficial effects: after the panel lamp operates for a certain period of time, the temperature of the light guide plate rises significantly due to the influence of the light emitting element on the light source board. In the process of temperature rising, the volume of the light guide plate also expands. After the expansion, the light guide plate squeezes the first elastic member. After receiving the force, the first elastic member is deformed so as to buffer the expanded volume of the light guide plate. As the first light source board and the first elastic member are located at two opposite ends of the light guide plate, respectively, when the light guide plate expands, due to the buffering effect of the first elastic member, the light emitting element on the first light source board is not easily squeezed, so that the first light source board is not easily damaged.

### Brief Description of Drawings

In order to more clearly illustrate technical solutions in implementations of the present disclosure, accompanying drawings which need to be used for description of the implementations or the prior art will be introduced briefly below, and apparently, the accompanying drawings in the following description merely show some implementations of the present disclosure, and those ordinarily skilled in the art still could obtain other drawings in light of these accompanying drawings, without using any creative efforts.
FIG. 1 is a sectional view of a panel lamp provided in one implementation of the present disclosure;
FIG. 2 is an exploded view of the panel lamp in FIG. 1;
FIG. 3 is a structural schematic view of the panel lamp in another implementation of the present disclosure;
FIG. 4 is an exploded view of the panel lamp in FIG. 3;
FIG. 5 is a structural schematic view of a light guide plate in an implementation of the present disclosure (provided with mesh dots);
FIG. 6 is a structural schematic view of a diffusion plate in an implementation of the present disclosure (provided with an atomization layer);
FIG. 7 is a structural schematic view of a first light source board in an implementation of the present disclosure; and
FIG. 8 is a structural schematic view of a second light source board in an implementation of the present disclosure;

### In the drawings:

1. frame body; 101. mounting groove; 102. positioning groove, 2. light guide plate; 201. first side surface; 202. second side surface; 203. third side surface; 204. fourth side surface; 205. mesh dot; 3. first light source board; 4. first elastic member; 5. second light source board; 6. second elastic member; 7. back panel; 701. positioning protrusion; 8. diffusion plate; 801. atomization layer; 9. reflective sheeting; 10. pearl cotton.

### Detailed Description of Embodiments

In order to make the objective, technical solutions and advantages of the present disclosure more clear, the present disclosure is further described in detail below in combination with accompanying drawings and implementations. It should be understood that the specific implementations described herein are merely used to explain the present disclosure, rather than being intended to limit the present disclosure.

It should be indicated that when an element is "fixed" or "provided" on another element, it may be directly on the another element or indirectly on the another element. When an element is "connected with" another element, it may be directly connected to the another element or indirectly connected to the another element.

It should be understood orientation or positional relations indicated by terms such as "length", "width", "upper", "lower", "front", "back", "left", "right", "vertical", "horizontal", "top", "bottom", "inner", and "outer" are based on orientation or positional relations as shown in the accompanying drawings, merely for facilitating the description of the present disclosure and simplifying the description, rather than indicating or implying that related devices or elements have to be in the specific orientation or configured and operated in a specific orientation, therefore, they should not be construed as limitations on the present disclosure.

Besides, terms "first" and "second" are merely for descriptive purpose, but should not be construed as indicating or implying importance in the relativity or suggesting the number of a related technical feature. Thus, a feature defined with "first" or "second" may explicitly or implicitly mean that one or more such features are included. In the description of the present disclosure, "multiple (a plurality of)" refers to two or more, unless otherwise defined explicitly.

The realization of the present disclosure is described in detail below in combination with specific implementations.

The inventors found that after being heated to expand, a material of a light guide plate easily squeezes a light source, and further squeezes the light source to damage the light source.

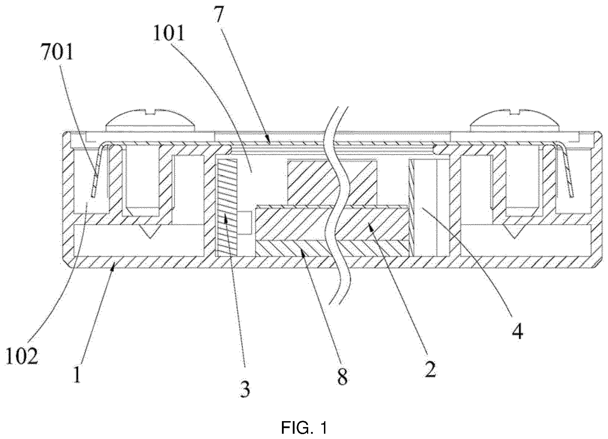

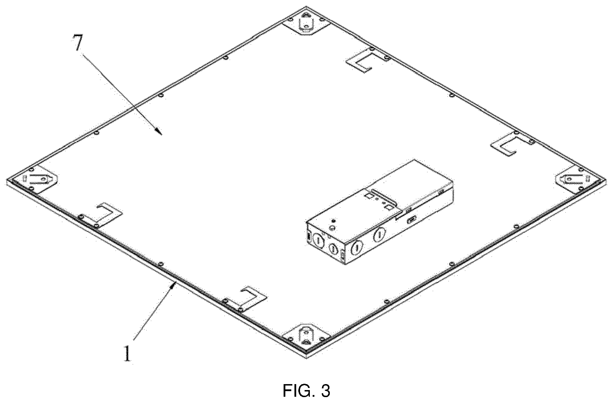

As shown in FIG. 1-FIG. 4, an implementation of the present disclosure proposes a panel lamp, including a frame body 1 having a mounting groove 101, a light guide plate 2 mounted in the mounting groove 101, a first light source board 3 provided in the mounting groove 101, and a first elastic member 4 provided in the mounting groove 101; the light guide plate 2 has a first side surface 201, a second side surface 202, a third side surface 203 and a fourth side surface 204 connected in sequence (i.e. the first side surface 201 is opposite to the third side surface 203, and the second side surface 202 is opposite to the fourth side surface 204); the first light source board 3 is located between the first side surface 201 and an inner side wall of the mounting groove 101; and the first elastic member 4 is located between the third side surface 203 and the inner side wall of the mounting groove 101.

In the implementation of the present disclosure, after the panel lamp operates for a certain period of time, the temperature of the light guide plate 2 rises significantly due to the influence of a light emitting element on the light source board. In the process of temperature rising, the volume of the light guide plate 2 also expands. After the expansion, the light guide plate 2 squeezes the first elastic member 4 and a second elastic member 6. After receiving a force, the first elastic member 4 and the second elastic member 6 are deformed so as to buffer the expanded volume of the light guide plate 2. As the first light source board 3 and the first elastic member 4 are located at two opposite ends of the light guide plate 2, respectively, a second light source board 5 and the second elastic member 6 are located at two opposite ends of the light guide plate 2, respectively, when the light guide plate 2 expands, due to the buffering effect of the first elastic member 4 and the second elastic member 6, the light emitting elements on the first light source board 3 and the second light source board 5 are not easily squeezed, so that the first light source board 3 and the second light source board 5 are not easily damaged.

Moreover, as the first light source board 3 and the second light source board 5 are located on two adjacent sides of the light guide plate 2, and form an L-like shape, the first light source board 3 and the second light source board 5 may provide light in a length direction and a width direction of the light guide plate 2 towards the inside of the light guide plate 2, respectively, which may ensure a better effect of light emission of the light guide plate 2.

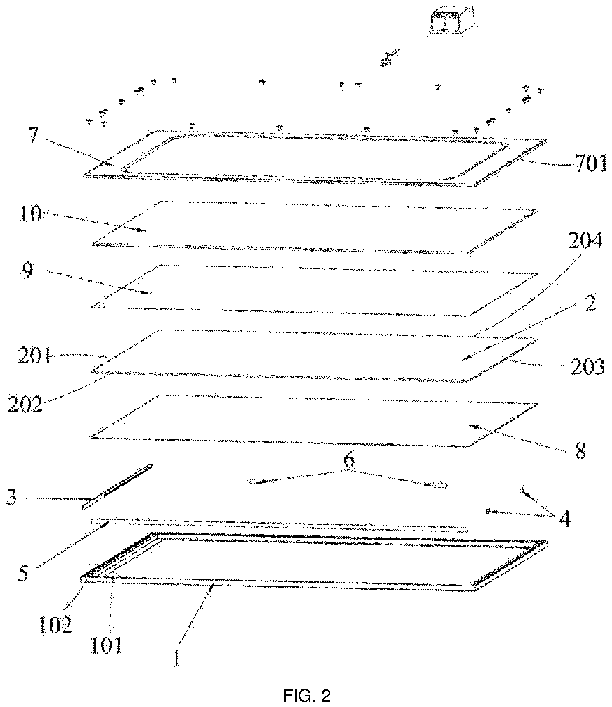

Referring to FIG. 2, as another specific implementation of the panel lamp provided in the present disclosure, both the first elastic member 4 and the second elastic member 6 are made of foam.

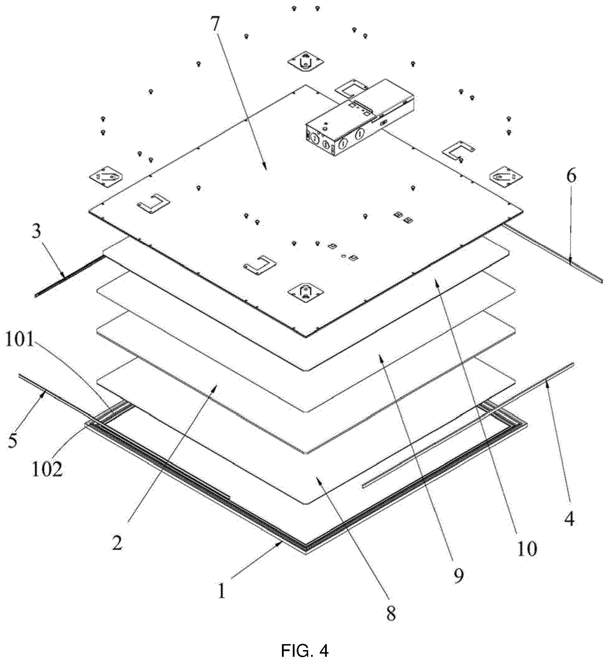

Referring to FIG. 4, as another specific implementation of the panel lamp provided in the present disclosure, both the first elastic member 4 and the second elastic member 6 are formed by elastic steel sheets, which are steel sheets having a certain radian, further realizing deformation after being squeezed and achieving buffering.

Referring to FIG. 2 and FIG. 4, a back panel 7 connected to the frame body 1 is further included, and the light guide plate 2 is located between the back panel 7 and the frame body 1.

Referring to FIG. 1-FIG. 2, as another specific implementation of the panel lamp provided in the present disclosure, the frame body 1 is provided thereon with a positioning groove 102, and an edge of the back panel 7 is provided with a positioning protrusion 701 inserted into the positioning groove 102, so as to avoid loosening of the position of the back panel 7 during use.

Referring to FIG. 2 and FIG. 4, a diffusion plate 8 provided on a side of the light guide plate 2 away from the back panel 7 is further included, so as to realize the diffusion of light, so that the light emission coverage area is relatively large.

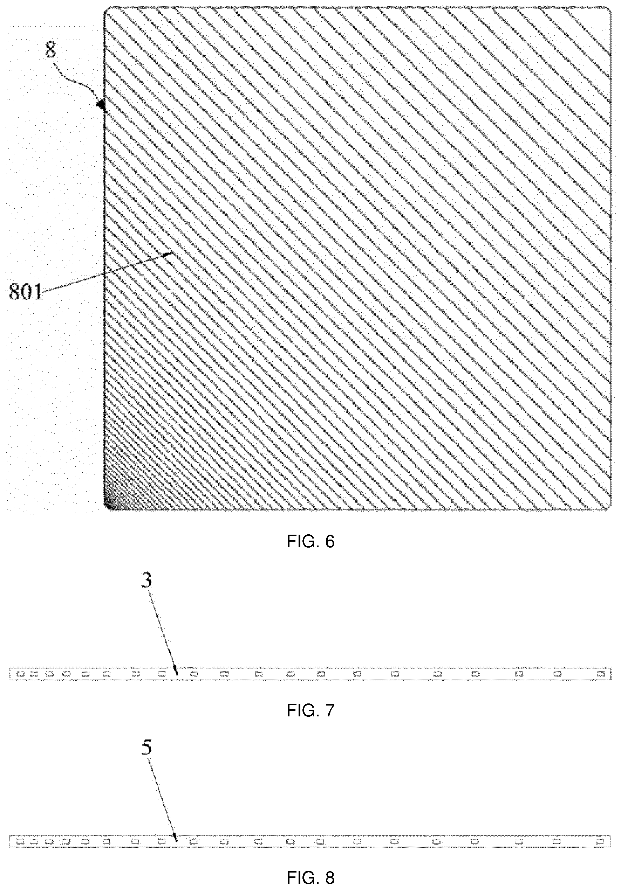

Referring to FIG. 6, according to the invention, an atomization layer 801 is provided on a side of the diffusion plate 8 away from the light guide plate 2, and the density of the atomization layer 801 gradually decreases in a direction from junction between the first side surface 201 and the second side surface 202 to junction between the third side surface 203 and the fourth side surface 204. The density of the atomization layer 801 refers to the degree of atomization, and the higher the atomization density (degree) is, the lower the light transmittance is. As a result, light emitted from the first light source board 3 and the second light source board 5 provided adjacent to each other may well propagate in the direction towards the junction between the third side surface 203 and the fourth side surface 204, so that the panel lamp emits light outward through the diffusion plate 8 with good uniformity.

Referring to FIG. 2 and FIG. 4, as another specific implementation of the panel lamp provided in the present disclosure, a reflective sheeting 9 provided between the light guide plate 2 and the back panel 7 is further included, and pearl cotton 10 is provided between the reflective sheeting 9 and the back panel 7, so as to avoid shaking of the light guide plate 2.

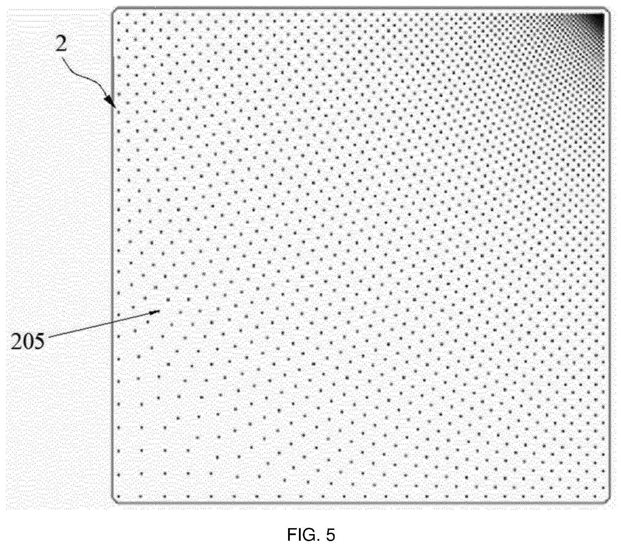

Referring to FIG. 5, as another specific implementation of the panel lamp provided in the present disclosure, a surface of a side of the light guide plate 2 close to the reflective sheeting 9 is provided with mesh dots 205 for changing a propagation direction of light (when light propagates to the mesh dots 205, a light emitting path is changed, and the light is brought upward to strike the reflective sheeting 9 and then reflected to pass through the light guide plate 2 to reach the diffusion plate 8, or is directly brought downward to strike the diffusion plate 8, both with a final purpose of allowing the light to propagate to the diffusion plate 8), wherein the density of the mesh dots 205 gradually increases in the direction from the junction between the first side surface 201 and the second side surface 202 to the junction between the third side surface 203 and the fourth side surface 204, so that light emitted from the first light source board 3 and the second light source board 5 provided adjacent to each other may better propagate in the direction towards the junction between the third side surface 203 and the fourth side surface 204, so that the panel lamp emits light outward through the diffusion plate 8 with better uniformity. The mesh dots 205 are mesh holes provided in the light guide plate 2, then when the light reaches the mesh holes, the light is brought upward to strike the reflective sheeting 9 and then is reflected to pass through the light guide plate 2 to reach the diffusion plate 8. Alternatively, the mesh dots 205 are printed dots printed (which may be screen printed) on the surface of the light guide plate 2, then when reaching the printed dots, the light is directly brought downward to strike the diffusion plate 8.

According to the invention, uniformity of light emission is achieved by current magnitude of each light emitting element on the light source board:
the current magnitude of the light emitting element on the first light source board 3 is gradually increased in a direction away from the second light source board 5; and by the same reasoning, the current magnitude of the light emitting element on the second light source board 5 is gradually increased in a direction away from the first light source board 3.

Referring to FIG. 7-FIG. 8, in an implementation of the present disclosure, uniformity of light emission may also be achieved by the density of the light emitting element on the light source board, for example, the density of the light emitting element on the first light source board 3 may be gradually increased in the direction away from the second light source board 5; and by the same reasoning, the density of the light emitting element on the second light source board 5 may be gradually increased in a direction away from the first light source board 3.

In an implementation of the present disclosure, holes may also be perforated on the reflective sheeting 9, and the greater the density of the holes is, the weaker the reflective capacity is, i.e., the smaller the amount of light emitted is. Therefore, the density of the reflective holes on the reflective sheeting 9 may be gradually decreased in the direction from the junction between the first side surface 201 and the second side surface 202 to the junction between the third side surface 203 and the fourth side surface 204.

It may be understood that a solution in another specific implementation may be an implementable solution further improved on the basis of other implementations.

Obviously, the above implementations of the present disclosure are merely examples for clearly illustrating the present disclosure, rather than limitation on the implementations of the present disclosure. Those ordinarily skilled in the art further might make other different forms of changes or alterations on the basis of the above description. It is unnecessary or impossible to enumerate all implementations herein.

## Claims

1. Panel lamp, comprising a frame body (1) having a mounting groove (101), a light guide plate (2) mounted in the mounting groove (101), a first light source board (3) provided in the mounting groove (101), a first elastic member (4) provided in the mounting groove (101), a second light source board (5) provided in the mounting groove (101), and a second elastic member (6) provided in the mounting groove (101), wherein the light guide plate (2) has a first side surface (201), a second side surface (202), a third side surface (203) and a fourth side surface (204) connected in sequence; the first light source board (3) is located between the first side surface (201) and an inner side wall of the mounting groove (101); the first elastic member (4) is located between the third side surface (203) and the inner side wall of the mounting groove (101); the second light source board (5) is located between the second side surface (202) and the inner side wall of the mounting groove (101); and the second elastic member (6) is located between the fourth side surface (204) and the inner side wall of the mounting groove (101),
wherein the panel lamp further comprises a back panel (7) connected to the frame body (1) and a diffusion plate (8) provided on a side of the light guide plate (2) away from the back panel (7), wherein the light guide plate (2) is located between the back panel (7) and the frame body (1), **characterized in that** an atomization layer (801) is provided on a side of the diffusion plate (8) away from the light guide plate (2), wherein a density of the atomization layer gradually decreases in a direction from a junction between the first side surface (201) and the second side surface (202) to a junction between the third side surface (203) and the fourth side surface (204), and a current magnitude of the light emitting element on the first light source board (3) is gradually increased in a direction away from the second light source board (5); and a current magnitude of the light emitting element on the second light source board is gradually increased in a direction away from the first light source board.

2. The panel lamp according to claim 1, wherein both the first elastic member (4) and the second elastic member (6) are made of foam.

3. The panel lamp according to claim 1, wherein both the first elastic member (4) and the second elastic member (6) are formed by elastic steel sheets.

4. The panel lamp according to claim 1, wherein the frame body (1) is provided thereon with a positioning groove (102), and an edge of the back panel (7) is provided with a positioning protrusion (701) inserted into the positioning groove (102).

5. The panel lamp according to claim 1, further comprising a reflective sheeting (9) provided between the light guide plate (2) and the back panel (7).

6. The panel lamp according to claim 5, wherein a surface of a side of the light guide plate (2) close to the reflective sheeting (9) is provided with mesh dots (205) for changing a propagation direction of light, wherein a density of the mesh dots (205) gradually increases in the direction from the junction between the first side surface (201) and the second side surface (202) to the junction between the third side surface (203) and the fourth side surface (204); and the mesh dots (205) are mesh holes provided in the light guide plate (2), or the mesh dots (205) are printed dots printed on a surface of the light guide plate (2).

## Patentansprüche

1. Flächenleuchte, umfassend einen Rahmenkörper (1) mit einer Befestigungsnut (101), eine in der Befestigungsnut (101) befestigte Lichtleiterplatte (2), eine in der Befestigungsnut (101) vorgesehene erste Lichtquellenplatte (3), ein erstes in der Befestigungsnut (101) vorgesehenes elastisches Element (4), eine zweite in der Befestigungsnut (101) vorgesehene Lichtquellentafel (5) und ein zweites in der Befestigungsnut (101) vorgesehenes elastisches Element (6), wobei die Lichtleiterplatte (2) eine erste Seitenfläche (201), eine zweite Seitenfläche (202), eine dritte Seitenfläche (203) und eine vierte Seitenfläche (204) aufweist, die sequenziell verbunden sind; sich die erste Lichtquellentafel (3) zwischen der ersten Seitenfläche (201) und einer inneren Seitenwand der Befestigungsnut (101) befindet; sich das erste elastische Element (4) zwischen der dritten Seitenfläche (203) und der inneren Seitenwand der Befestigungsnut (101) befindet; sich die zweite Lichtquellentafel (5) zwischen der zweiten Seitenfläche (202) und der inneren Seitenwand der Befestigungsnut (101) befindet; und sich das zweite elastische Element (6) zwischen der vierten Seitenfläche (204) und der inneren Seitenwand der Befestigungsnut (101) befindet,
wobei die Flächenleuchte ferner eine mit dem Rahmenkörper (1) verbundene Rückwand (7) und eine an einer von der Rückwand (7) abgewandten Seite der Lichtleiterplatte (2) vorgesehene Diffusionsplatte (8) umfasst, wobei sich die Lichtleiterplatte (2) zwischen der Rückwand (7) und dem Rahmenkörper (1) befindet, **dadurch gekennzeichnet, dass** auf einer der Lichtleiterplatte (2) abgewandten Seite der Diffusionsplatte (8) eine Vernebelungsschicht (801) vorgesehen ist, wobei eine Dichte der Vernebelungsschicht in einer Richtung von einer Verbindungsstelle zwischen der ersten Seitenfläche (201) und der zweiten Seitenfläche (202) zu einer Verbindungsstelle zwischen der dritten Seitenfläche (203) und der vierten Seitenfläche (204) allmählich abnimmt und eine Stromgröße des lichtemittierenden Elements auf der ersten Lichtquellentafel (3) in einer Richtung weg von der zweiten Lichtquellentafel (5) allmählich erhöht wird; und eine Stromgröße des lichtemittierenden Elements auf der zweiten Lichtquellentafel in einer Richtung weg von der ersten Lichtquellentafel allmählich erhöht wird.

2. Flächenleuchte nach Anspruch 1, wobei sowohl das erste elastische Element (4) als auch das zweite elastische Element (6) aus Schaumstoff hergestellt sind.

3. Flächenleuchte nach Anspruch 1, wobei sowohl das erste elastische Element (4) als auch das zweite elastische Element (6) durch elastische Stahlbleche gebildet sind.

4. Flächenleuchte nach Anspruch 1, wobei der Rahmenkörper (1) darauf mit einer Positionierungsnut (102) versehen ist und eine Kante der Rückwand (7) mit einem Positionierungsvorsprung (701) versehen ist, der in die Positionierungsnut (102) eingesetzt ist.

5. Flächenleuchte nach Anspruch 1, ferner umfassend eine reflektierende Folie (9), die zwischen der Lichtleiterplatte (2) und der Rückwand (7) vorgesehen ist.

6. Flächenleuchte nach Anspruch 5, wobei eine Fläche einer Seite der Lichtleiterplatte (2) nahe der reflektierenden Folie (9) mit Netzpunkten (205) zum Ändern der Ausbreitungsrichtung von Licht versehen ist, wobei eine Dichte der Netzpunkte (205) in der Richtung von der Verbindungsstelle zwischen der ersten Seitenfläche (201) und der zweiten Seitenfläche (202) zur Verbindungsstelle zwischen der dritten Seitenfläche (203) und der vierten Seitenfläche (204) allmählich zunimmt; und die Netzpunkte (205) in der Lichtleiterplatte (2) vorgesehene Netzlöcher sind oder die Netzpunkte (205) gedruckte Punkte sind, die auf einer Fläche der Lichtleiterplatte (2) gedruckt sind.

## Revendications

1. Lampe de panneau, comprenant un corps de cadre (1) ayant une rainure de montage (101), une plaque de guidage de lumière (2) montée dans la rainure de montage (101), une première carte de source lumineuse (3) prévue dans la rainure de montage (101), un premier élément élastique (4) prévu dans la rainure de montage (101), une seconde carte de source lumineuse (5) prévue dans la rainure de montage (101) et un second élément élastique (6) prévu dans la rainure de montage (101), dans laquelle la plaque de guidage de lumière (2) a une première surface latérale (201), une deuxième surface latérale (202), une troisième surface latérale (203) et une quatrième surface latérale (204) reliées en séquence ; la première carte de source lumineuse (3) est située entre la première surface latérale (201) et une paroi latérale interne de la rainure de montage (101) ; le premier élément élastique (4) est situé entre la troisième surface latérale (203) et la paroi latérale interne de la rainure de montage (101) ; la seconde carte de source lumineuse (5) est située entre la deuxième surface latérale (202) et la paroi latérale interne de la rainure de montage (101) ; et le second élément élastique (6) est situé entre la quatrième surface latérale (204) et la paroi latérale interne de la rainure de montage (101),
dans laquelle la lampe de panneau comprend en outre un panneau arrière (7) relié au corps de cadre (1) et une plaque de diffusion (8) prévue sur un côté de la plaque de guidage de lumière (2) éloigné du panneau arrière (7), dans laquelle la plaque de guidage de lumière (2) est située entre le panneau arrière (7) et le corps de cadre (1), **caractérisée en ce qu'**une couche d'atomisation (801) est prévue sur un côté de la plaque de diffusion (8) éloigné de la plaque de guidage de lumière (2), dans laquelle une densité de la couche d'atomisation diminue progressivement dans une direction allant d'une jonction entre la première surface latérale (201) et la deuxième surface latérale (202) à une jonction entre la troisième surface latérale (203) et la quatrième surface latérale (204) et une amplitude de courant de l'élément électroluminescent sur la première carte de source lumineuse (3) est progressivement augmentée dans une direction s'éloignant de la seconde carte de source lumineuse (5) ; et une amplitude de courant de l'élément électroluminescent sur la seconde carte de source lumineuse est progressivement augmentée dans une direction s'éloignant de la première carte de source lumineuse.

2. Lampe de panneau selon la revendication 1, dans laquelle à la fois le premier élément élastique (4) et le second élément élastique (6) sont formés de mousse.

3. Lampe de panneau selon la revendication 1, dans laquelle à la fois le premier élément élastique (4) et le second élément élastique (6) sont formés par des tôles d'acier élastiques.

4. Lampe de panneau selon la revendication 1, dans laquelle le corps de cadre (1) est pourvu, sur celui-ci, d'une rainure de positionnement (102) et un bord du panneau arrière (7) est pourvu d'une saillie de positionnement (701) insérée dans la rainure de positionnement (102).

5. Lampe de panneau selon la revendication 1, comprenant en outre une feuille réfléchissante (9) prévue entre la plaque de guidage de lumière (2) et le panneau arrière (7).

6. Lampe de panneau selon la revendication 5, dans laquelle une surface d'un côté de la plaque de guidage de lumière (2) proche de la feuille réfléchissante (9) est pourvue de points de maille (205) pour modifier une direction de propagation de la lumière, dans laquelle une densité des points de maille (205) augmente progressivement dans la direction allant de la jonction entre la première surface latérale (201) et la deuxième surface latérale (202) à la jonction entre la troisième surface latérale (203) et la quatrième surface latérale (204) ; et les points de maille (205) sont des trous de maille prévus dans la plaque de guidage de lumière (2) ou les points de maille (205) sont des points imprimés, qui sont imprimés sur une surface de la plaque de guidage de lumière (2).
